# EUROPÄISCHE PATENTANMELDUNG

(11) **EP 3 663 119 A1**
(43) Veröffentlichungstag der Anmeldung: **10.06.2020**
(21) Anmeldenummer: 19203055.9
(22) Anmeldetag: 14.10.2019
(51) Int. Cl.: B60K 37/06, E02F 9/20, G05G 9/047

(54) **BEDIENGERÄT ZUR STEUERUNG EINER LANDWIRTSCHAFTLICHEN ARBEITSMASCHINE**

(30) Priorität: 05.12.2018 DE 102018130939
(71) Anmelder: CLAAS Selbstfahrende Erntemaschinen GmbH, 33428 Harsewinkel (DE)
(72) Erfinder: Pollklas, Manfred, 33378 Rheda-Wiedenbrück (DE)
(74) Vertreter: CLAAS Gruppe

(57) **Zusammenfassung**

Bediengerät zur Steuerung einer landwirtschaftlichen Arbeitsmaschine (30), wobei zumindest einem Bedienelement (7) des Bediengerätes (1, 22, 39, 40) eine Vielzahl unterschiedlicher Funktionen manuell durch einen Bediener zugewiesen werden können, wobei die landwirtschaftliche Arbeitsmaschine (30) zumindest eine Recheneinheit umfasst, wobei die Recheneinheit mit dem Bediengerät verbunden ist, wobei die Recheneinheit dem Bedienelement (7) automatisch eine vorbestimmte Funktion zuweist (53), wenn die Recheneinheit den Eintritt eines vorbestimmten Maschinenereignisses (51) erfasst.

## Beschreibung

Die Erfindung betrifft ein Bediengerät zur Steuerung einer landwirtschaftlichen Arbeitsmaschine nach dem Oberbegriff des Patentanspruchs 1.

Aus der DE19619419B4 ist ein Multifunktionsgriff bekannt, bei dem über eine Menü-Bedientaste mehrere Menüebenen auswählbar sind und in Abhängigkeit von der Menüebene den Bedienelementen des Multifunktionsgriffs unterschiedliche Steuerfunktionen zugewiesen sind.

Landwirtschaftliche Arbeitsmaschinen besitzen eine Vielzahl von Funktionen, welche vom Fahrer gesteuert oder beeinflusst werden können. An einem Feldhäcksler kann der Fahrer bspw. Sollwerte für Teilbreite oder Schnittlänge verstellen oder Hydraulikfunktionen bspw. für das Auffahren und Absenken des Rollenniederhalters oder das Ausklappen des Maisgebisses betätigen. Die Bedienung findet dabei häufig über einen Multifunktionsgriff mit einer Vielzahl an Bedienelementen statt. Die Anzahl der Bedienelemente ist dabei begrenzt und typischerweise kleiner als die Anzahl der zu bedienenden Funktionen. Einigen Bedienelementen können daher manuell unterschiedliche Funktionen zugewiesen werden.

Nachteilig am Stand der Technik ist, dass die manuelle Zuweisung aufwändig und fehleranfällig ist. Insbesondere selten auftretende Maschinenereignisse können den Bediener ablenken und zu Fehlbedienungen verleiten.

Aufgabe der Erfindung ist es den Stand der Technik weiterzubilden und insbesondere die Bedienung der landwirtschaftlichen Arbeitsmaschine zu verbessern.

Die Erfindung betrifft ein Bediengerät zur Steuerung einer landwirtschaftlichen Arbeitsmaschine, wobei zumindest einem Bedienelement des Bediengerätes eine Vielzahl unterschiedlicher Funktionen manuell durch einen Bediener zugewiesen werden können, wobei die landwirtschaftlichen Arbeitsmaschine zumindest eine Recheneinheit umfasst, wobei die Recheneinheit mit dem Bediengerät verbunden ist, wobei die Recheneinheit dem Bedienelement automatisch eine vorbestimmte Funktion zuweist, wenn die Recheneinheit den Eintritt eines vorbestimmten Maschinenereignisses erfasst.

Die Erfindung betrifft zudem ein Verfahren zur Zuweisung einer vorbestimmten Funktion zu einem Bedienelement, wobei das Bedienelement zur Steuerung einer landwirtschaftlichen Arbeitsmaschine dient, wobei dem Bedienelement eine Vielzahl unterschiedlicher Funktionen manuell durch einen Bediener zugewiesen werden können, wobei dem Bedienelement automatisch eine vorbestimmte Funktion zugewiesen wird, wenn der Eintritt eines vorbestimmten Maschinenereignisses erfasst wird.

Vorteil der Erfindung ist, dass sich das Bedienelement nach dem vorbestimmten Ereignis in einem definierten Zustand befindet. Nach einigen Maschinenereignissen ist die nächste vom Bediener zu aktivierende Funktion vorbestimmt. Durch die Erfindung wird direkt diese vorbestimmte Funktion automatisch dem Bedienelement zugewiesen. Die vorbestimmte Funktion ist dabei vorzugsweise eine Funktion der Vielzahl unterschiedlicher Funktionen, welche dem Bedienelement manuell zugewiesen werden können. Der Bediener kann diese Funktion direkt aufrufen ohne vorher manuell die Funktion dem Bedienelement zuzuweisen. Dadurch wird eine Fehlbedienung durch routinemäßige Betätigung des Bedienelementes ohne korrekte Zuweisung der Funktion vermindert. Die Recheneinheit ist bspw. ein Mikrocontroller, ein Prozessor oder eine FPGA.

Eine landwirtschaftliche Arbeitsmaschine ist bspw. ein Feldhäcksler, ein Mähdrescher oder ein Traktor.

In einer vorteilhaften Ausgestaltung ist die landwirtschaftliche Arbeitsmaschine mit einem Sensor verbunden und das vorbestimmte Maschinenereignis der Empfang eines vorbestimmten Sensorsignals. Ein Sensor kann bspw. ein Metalldetektor, ein Steindetektor ein Infrarotdetektor, ein Laserscanner, ein Ultraschallsensor oder eine Kamera sein. Vorzugsweise ist der Sensor über einen Bus oder ein Netzwerk mit einer Recheneinheit gekoppelt. Die Recheneinheit erkennt ob das Sensorsignal zu dem vorbestimmten Maschinenereignis gehört und weist dem Bedienelement die vorbestimmte Funktion zu, wenn aus dem Sensorsignal das vorbestimmte Ereignis erkannt wird. Das vorbestimmte Ereignis kann bspw. ein vom Metalldetektor gemeldeter Metallfund sein.

In einer anderen vorteilhaften Ausgestaltung erfasst die Recheneinheit die Ausführung der Maschinenfunktionen landwirtschaftlichen Arbeitsmaschine und das vorbestimmte Ereignis die Ausführung einer vorbestimmten Maschinenfunktion ist. Die vorbestimmte Funktion kann bspw. die Reversierung des Einzugs eines Feldhäckslers sein. Bei der Nutzung einer Pick-up mit Rollenniederhalter wird bei der Reversierung des Einzugs typischerweise automatisch der Rollenniederhalter aufgefahren. Wenn nach der Reversierung automatisch die Funktion des Rollenniederhalters dem Bedienelement zugewiesen wird, kann der Bediener den Rollenniederhalter absenken ohne die Funktion manuell dem Bedienelement zuzuweisen.

In einer vorteilhaften Ausgestaltung ist das vorbestimmte Maschinenereignis eine Kombination mehrerer Maschinenereignisse. Bspw. kann beim gleichzeitigen Auftreten mehrerer vorbestimmter Sensorsignale dem Bedienelement eine vorbestimmte Funktion zugewiesen werden, während dies beim Auftreten der einzelnen Sensorsignale nicht der Fall ist. Die Kombination kann auch ein vorbestimmtes Sensorsignal während der Ausführung einer vorbestimmten Maschinenfunktion sein. Auch eine temporale Kombination von Maschinenereignissen ist möglich. Bspw. kann ein Metallfund gefolgt von einer Reversierung des Einzugs eines Feldhäckslers ein vorbestimmtes Ereignis sein.

In einer Ausgestaltung der Erfindung prüft die Recheneinheit ob eine Vorbedingung erfüllt ist und die vorbestimmte Funktion wird dem Bedienelement von der Recheneinheit nur zugewiesen, wenn die Vorbedingung erfüllt ist. Eine solche Vorbedingung kann bspw. sein, dass ein Anbaugerät an der landwirtschaftlichen Arbeitsmaschine angebracht ist. Ein solches Anbaugerät kann bspw. ein Pick-up für einen Feldhäcksler sein.

In einer vorteilhaften Ausgestaltung umfasst das Bediengerät mindestens einen Multifunktionsgriff, wobei der Multifunktionsgriff eine Vielzahl an Bedienelementen aufweist. Ein Multifunktionsgriff ermöglicht dem Bediener die Bedienung einer Vielzahl von Bedienelementen auf sehr ergonomische Weise.

In einer Ausgestaltung der Erfindung ist das Maschinenereignis an der landwirtschaftlichen Arbeitsmaschine aufgetreten.

In einer anderen Ausgestaltung der Erfindung ist das Maschinenereignis an einer mit der landwirtschaftlichen Arbeitsmaschine verbundenen Maschine aufgetreten.

In einer vorteilhaften Ausgestaltung gibt die Recheneinheit eine Mitteilung über die dem Bedienelement automatisch zugewiesene Funktion, vorzugsweise optisch und/oder akustisch, aus. Durch die Mitteilung über die automatisch zugewiesene Funktion wird verhindert, dass der Bediener die zuvor dem Bedienelement zugewiesene Funktion betätigen möchte und dadurch eine Fehlbedienung auslöst. Eine akustische Mitteilung kann bspw. durch einen in der Nähe des Bediengerätes angebrachten Lautsprecher erfolgen. Eine optische Mitteilung kann bspw. durch einen am Bediengerät oder in der Nähe des Bediengerätes angebrachtes Anzeigeelement erfolgen. In der Nähe bedeutet in diesem Fall, dass der Bediener die Mitteilung erfassen kann, wenn er das Bediengerät manuell betätigen kann.

In einer Ausgestaltung ist das Bedienelement ein haptischer Schalter, vorzugsweise eine Taste, ein Mehrwegeschalter oder ein Wipptaster. Haptische Schalter sind im landwirtschaftlichen Bereich besonders vorteilhaft, da der Bediener die haptischen Schalter auch ohne Sichtkontakt bedienen kann und sich daher besser auf das Umfeld der landwirtschaftlichen Arbeitsmaschine konzentrieren kann.

In einer Ausgestaltung umfasst die Vielzahl der unterschiedlichen Funktionen zumindest eine Sollwertverstellung für eine Regelungsfunktion oder eine Steuerfunktion der landwirtschaftlichen Arbeitsmaschine oder einer mit der landwirtschaftlichen Arbeitsmaschine verbundenen Maschine. Sollwerte können bspw. bei einem Feldhäcksler unter anderem für die Schnittlänge und die Teilbreite vorgegeben werden.

In einer Ausgestaltung umfasst die Vielzahl der unterschiedlichen Funktionen zumindest eine hydraulische Funktion der landwirtschaftlichen Arbeitsmaschine oder einer mit der landwirtschaftlichen Arbeitsmaschine verbundenen Maschine. Eine hydraulische Funktion ist bspw. das Auffahren und Absenken des Rollenniederhalters. Eine andere hydraulische Funktion ist Zuklappen und Aufklappen des Maisgebisses.

Ein Ausführungsbeispiel wird nachfolgend anhand der Zeichnungen näher erläutert.

Es zeigen:
- Figur 1: eine schematische Seitenansicht eines Feldhäckslers,
- Figur 2: eine schematische Ansicht eines Multifunktionsgriffs,
- Figur 3: ein Ablaufdiagramm eines erfindungsgemäßen Verfahrens.

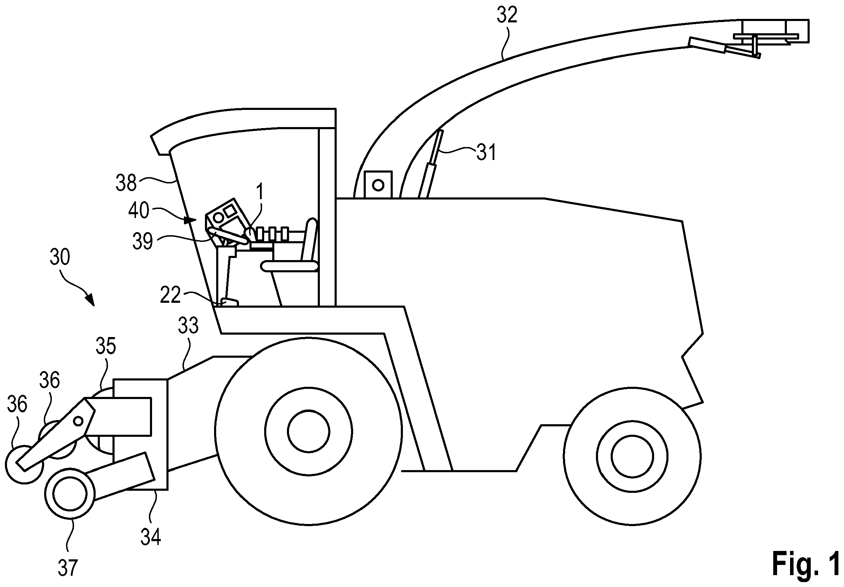

In Figur 1 ist ein Feldhäcksler 30 dargestellt. Der Feldhäcksler 30 weist einen mittels Hydraulikzylinder 31 betätigbaren Überladekrümmer 32 auf. Ferner weist der Feldhäcksler 30 ein über ein Einzugsaggregat 33 mit dem Chassis verbundenen Pick-up 34 auf, an dem eine Einzugsschnecke 35, Rollenniederhalter 36 sowie ein Stützrad 37 befestigt sind.

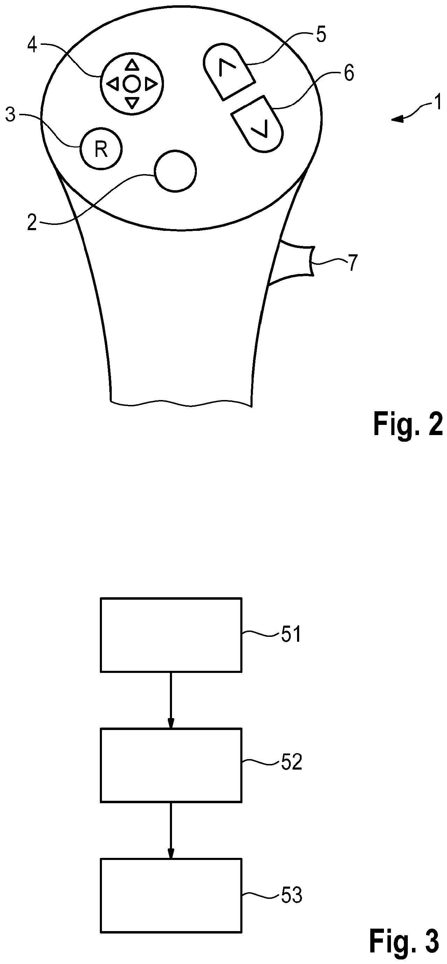

Weiterhin weist der Feldhäcksler 30 einer Führerkabine 38 auf, in der ein Lenkrad 39 zum Lenken des Feldhäckslers 30 sowie ein Bedienpult 40 angeordnet sind. Das Bediengerät besteht im Wesentlichen aus einem Multifunktionsgriff 1 mit einer Vielzahl an Bedienelementen, welche in Figur 2 näher erläutert wird. Weitere Bedienelemente können als Tasten, Hebel oder Schalter an der Armlehne, dem Lenkrad 39 und dem Bedienpult 40 oder als Fußtaster 22 in der Kabine angeordnet sein. Die Bedienelemente, die auf elektrischem, elektronischem oder elektromechanischem Weg auch auf nicht dargestellte Stelleinheiten des Feldhäckslers 30 einwirken, sind Bestandteil des Bediengerätes.

Das Einzugsaggregat 33 umfasst einen Metallsensor und einen Steinsensor zur Fremdkörpererkennung. Das Signal eines solchen Sensors kann zur Erkennung eines vorbestimmten Ereignisses dienen.

Im Feldhäcksler ist eine nicht dargestellte Recheneinheit vorhanden, welche Sensorsignale auswertet, die Betätigung von Bedienelementen registriert und die Ausführung von Funktionen überwacht. Die Recheneinheit führt auch das erfindungsgemäße Verfahren aus.

In Figur 2 ist ein Multifunktionsgriff 1 dargestellt. Der Multifunktionsgriff 1 umfasst als Bedienelemente mehrere Tasten, denen jeweils eine Funktion fest zugewiesen ist. So ist eine Taste 2 für die Aktivierung des Einzugsaggregats 33 vorgesehen und eine weitere Taste 3 für die Reversierung des Eizugsaggregats 33 vorgesehen. Ein Mehrwegeschalter 4 ist für die Steuerung des Überladekrümmers 32 vorgesehen. Über die beiden Tasten "Nächste Funktion" 5 und "Vorherige Funktion" 6 kann dem Wippschalter 7 manuell eine Funktion zugeordnet werden. Erkennt die Recheneinheit das vorbestimmte Maschinenereignis weist die Recheneinheit die vorbestimmte Funktion dem Wipptaster 7 zu.

In Figur 3 ist ein Ablaufdiagramm eines erfindungsgemäßen Verfahren dargestellt. In einem ersten Schritt 51 wird der Eintritt eines vorbestimmten Ereignisses erkannt. In diesem Beispiel ist das vorbestimmte Ereignis die Reversierung des Einzugsaggregats 33. In einem zweiten optionalen Schritt 52 wird eine Vorbedingung überprüft. In diesem Beispiel wird geprüft ob ein Pick-up 34 mit Rollenniederhalter 36 mit dem Einzugsaggregat 33 verbunden ist. Bei der Reversierung des Einzugsaggregats 33 wird der Rollenniederhalter 36 automatisch aufgefahren. In einem dritten Schritt 53 wird die vorbestimmte Funktion dem Bedienelement zugewiesen. In diesem Beispiel wird dem Wipptaster die Funktion "Rollenniederhalter" zugewiesen. Dem Bediener ist es nun möglich über den Wipptaster 7 den Rollenniederhalter 36 abzusenken ohne die Funktion manuell dem Wipptaster 7 zuzuweisen.

**Bezugszeichenliste**

| | | | |
|---|---|---|---|
| 1 | Multifunktionsgriff | 34 | Pick-up |
| 2 | Taste | 35 | Einzugsschnecke |
| 3 | Taste | 36 | Rollenniederhalter |
| 4 | Mehrwegeschalter | 37 | Stützrad |
| 5 | Taste "Nächste Funktion" | 38 | Führerkabine |
| 6 | Taste "Vorherige Funktion" | 39 | Lenkrad |
| 7 | Wipptaster | 40 | Bedienpult |
| 22 | Fußtaster | 51 | Schritt: "Ereignis erkennen" |
| 30 | Feldhäcksler | 52 | Schritt: "Vorbedingung prüfen" |
| 33 | Einzugsaggregat | 53 | Schritt: "Funktion zuweisen" |

## Patentansprüche

1. Bediengerät zur Steuerung einer landwirtschaftlichen Arbeitsmaschine (30),
wobei zumindest einem Bedienelement (7) des Bediengerätes (1, 22, 39, 40) eine Vielzahl unterschiedlicher Funktionen manuell durch einen Bediener zugewiesen werden können,
wobei die landwirtschaftliche Arbeitsmaschine (30) zumindest eine Recheneinheit umfasst,
wobei die Recheneinheit mit dem Bediengerät verbunden ist,
**dadurch gekennzeichnet, dass** die Recheneinheit dem Bedienelement (7) automatisch eine vorbestimmte Funktion zuweist (53), wenn die Recheneinheit den Eintritt eines vorbestimmten Maschinenereignisses (51) erfasst.

2. Bediengerät nach Anspruch 1, **dadurch gekennzeichnet, dass** die landwirtschaftliche Arbeitsmaschine (30) mit einem Sensor verbunden und das vorbestimmte Maschinenereignis der Empfang eines vorbestimmten Sensorsignals ist.

3. Bediengerät nach Anspruch 1, **dadurch gekennzeichnet, dass** die Recheneinheit die Ausführung der Maschinenfunktionen der landwirtschaftlichen Arbeitsmaschine (30) erfasst und das vorbestimmte Ereignis die Ausführung einer vorbestimmten Maschinenfunktion ist.

4. Bediengerät nach einem der vorhergehenden Ansprüche, **dadurch gekennzeichnet, dass** das vorbestimmte Maschinenereignis eine Kombination mehrerer Maschinenereignisse ist.

5. Bediengerät nach einem der vorhergehenden Ansprüche, **dadurch gekennzeichnet, dass** die Recheneinheit prüft ob eine Vorbedingung erfüllt ist (52) und die vorbestimmte Funktion dem Bedienelement (7) von der Recheneinheit nur zugewiesen wird, wenn die Vorbedingung erfüllt ist.

6. Bediengerät nach einem der vorhergehenden Ansprüche, **dadurch gekennzeichnet, dass** das Bediengerät (1, 22, 39, 40) mindestens einen Multifunktionsgriff (1) umfasst, wobei der Multifunktionsgriff (1) eine Vielzahl an Bedienelementen (2, 3, 4, 5, 6, 7) aufweist.

7. Bediengerät nach einem der vorhergehenden Ansprüche, **dadurch gekennzeichnet, dass** das Maschinenereignis an der landwirtschaftlichen Arbeitsmaschine (30) aufgetreten ist.

8. Bediengerät nach einem Ansprüche 1 bis 6, **dadurch gekennzeichnet, dass** das Maschinenereignis an einer mit der landwirtschaftlichen Arbeitsmaschine (30) verbundenen Maschine (34) aufgetreten ist.

9. Bediengerät nach einem der vorhergehenden Ansprüche, **dadurch gekennzeichnet, dass** die Recheneinheit eine Mitteilung über die dem Bedienelement (7) automatisch zugewiesene Funktion, vorzugsweise optisch und/oder akustisch, ausgibt.

10. Bediengerät nach einem der vorhergehenden Ansprüche, **dadurch gekennzeichnet, dass** das Bedienelement (7) ein haptischer Schalter, vorzugsweise eine Taste, ein Mehrwegeschalter oder ein Wipptaster, ist.

11. Bediengerät nach einem der vorhergehenden Ansprüche, **dadurch gekennzeichnet, dass** die Vielzahl der unterschiedlichen Funktionen zumindest eine Sollwertverstellung für eine Regelungsfunktion oder eine Steuerfunktion der landwirtschaftlichen Arbeitsmaschine (30) oder einer mit der landwirtschaftlichen Arbeitsmaschine (30) verbundenen Maschine (34) umfasst.

12. Bediengerät nach einem der vorhergehenden Ansprüche, **dadurch gekennzeichnet, dass** die Vielzahl der unterschiedlichen Funktionen zumindest eine hydraulische Funktion der landwirtschaftlichen Arbeitsmaschine (30) oder einer mit der landwirtschaftlichen Arbeitsmaschine (30) verbundenen Maschine (34) umfasst.

13. Verfahren zur Zuweisung einer vorbestimmten Funktion zu einem Bedienelement (7),
wobei das Bedienelement (7) zur Steuerung einer landwirtschaftlichen Arbeitsmaschine (30) dient,
wobei dem Bedienelement (7) eine Vielzahl unterschiedlicher Funktionen manuell durch einen Bediener zugewiesen werden können, **dadurch gekennzeichnet, dass** dem Bedienelement (7) automatisch eine vorbestimmte Funktion zugewiesen wird (53), wenn der Eintritt eines vorbestimmten Maschinenereignisses (51) erfasst wird.

14. Verfahren nach Anspruch 13, **dadurch gekennzeichnet, dass** eine Mitteilung über die dem Bedienelement (7) automatisch zugewiesene Funktion vorzugsweise optisch und/oder akustisch, ausgegeben wird.

15. Verfahren nach Anspruch 13 oder 14, **dadurch gekennzeichnet**, geprüft wird ob eine Vorbedingung erfüllt ist (52) und dass die vorbestimmte Funktion dem Bedienelement (7) nur zugewiesen wird (53), wenn die Vorbedingung erfüllt ist.
